# EUROPEAN PATENT SPECIFICATION

(11) **EP 2 827 316 B1**
(45) Date of publication and mention of the grant of the patent: **12.02.2020**
(21) Application number: 13176508.3
(22) Date of filing: 15.07.2013
(51) Int. Cl.: G08G 1/16, G08G 1/00, B60W 30/165, G06K 9/00, B60W 30/18, B60W 30/16

(54) **Driver assistance**
Fahrhilfe
Assistance au conducteur

(43) Date of publication of application: 21.01.2015
(73) Proprietor: Harman Becker Automotive Systems GmbH, 76307 Karlsbad (DE)
(72) Inventor: Strassenburg-Kleciak, Marek, 85748 Garching b. München (DE)
(74) Representative: Bertsch, Florian Oliver

(56) References cited:
- DE-A1-102006 016 807
- FR-A1- 2 790 858
- GB-A- 2 485 843
- US-A1- 2010 123 778
- US-A1- 2011 032 118
- US-A1- 2012 095 641
- US-A1- 2012 188 374
- US-A1- 2013 041 567
- US-A1- 2013 116 861
- US-A1- 2013 131 949
- US-A1- 2013 158 852

## Description

### Technical Field

Various embodiments relate to techniques of providing driver assistance for a driver of a vehicle. In particular, various techniques relate to receiving image data of a forward-view camera of a preceding vehicle and to receiving at least one movement value of the preceding vehicle.

### Background

Techniques are known which enable to establish a wireless data connection between vehicles, e.g., passenger cars or trucks, located within a vicinity with respect to each other. For example, the wireless data connection can be according to the car-to-car (car2car) data communication standard. It is also known to exchange data between vehicles by means of the wireless local area network (WLAN) data communication standard.

For example, it is known to exchange operational parameters between the vehicles via the wireless data connection. For example, applications of driver assistance can be realized which provide diver assistance and/or warning functionality, e.g. to all vehicles which are located within the vicinity. The vicinity may be defined in terms of a transmission range of the wireless data connection.

US patent application US2012/0095641 A1 discloses a method of wireless communication between vehicles, according to which a second vehicle located in relation to a first vehicle is identified by the first vehicle.

US patent application US2012/0188374 A1 discloses a method for operating a driver assist system of an automobile providing a recommendation relating to a passing maneuver.

However, such techniques may face certain restrictions. For example, sometimes it may be desirable to provide the driver assistance in a more selective manner than with respect to all vehicles within the vicinity.

Accordingly, a need exists for advanced techniques of providing driver assistance which rely on wirelessly receiving at least one operational parameter of a further vehicle.

### Summary

This need is met by the features of the independent claims. The dependent claims define embodiments.

According to an aspect, a method of providing driver assistance for a driver or a second vehicle by wirelessly receiving at least one operational parameter of a first vehicle according to appended claims 1-6 is provided.

The first vehicle and the second vehicle moving in immediate succession may relate to the first vehicle driving directly ahead of the second vehicle. In other words, the first vehicle and the second vehicle moving in immediate succession relates to no further vehicle being in between the first and second vehicles. For example, the first and second vehicles may drive on the same road and may drive in the same direction.

The at least one operation parameter is received via a wireless data connection established between the first and second vehicles. The wireless data connection may be according to the WLAN standard and / or according to the car2car standard. Other examples of the wireless data connection may include: Bluetooth, Near Field Communication, mobile telephony network, etc. The method comprises in response to the determining, selectively establishing the wireless data connection if the first and second vehicles move in immediate succession. E.g., for this establishing of the wireless data connection, position data of the first vehicle and/or the second vehicle may be exchanged between the first and second vehicles. The position data may be determined using a vehicle navigation system.

In further scenarios, it may additionally or alternatively be possible that the second vehicle is configured to determine an identification number of the first vehicle from image data which is obtained from a forward-view camera of the second vehicle. For example, the identification number can at least partly correspond to a license plate number of the first vehicle which may be obtained, e.g., via image analysis of the obtained image data which images the license plate of the first vehicle. It is also possible that the identification number corresponds to a machine readable code which is obtained from markers and/or relates to a light pulse sequence emitted by a light source arranged on a read part of the first vehicle. Then the second vehicle may broadcast a wireless data connection request which at least partly includes the determined identification number of the first vehicle. The second vehicle may further receive a wireless data connection reply which may, e.g., be sent by the first vehicle in response to receiving the wireless data connection request. The wireless data connection reply may comprise at least parts of the identification number of the first vehicle, e.g., parts which had been missing in the wireless data connection request. Further, the wireless data connection reply may optionally comprise at least parts of an identification number of the second vehicle. Then, in response to the receiving of the wireless data connection reply, the second vehicle and / or the first vehicle may participate in the establishing of the wireless data connection between the first and second vehicles. In such scenarios, because it is typically only possible to determine the identification number of the first vehicle from the image data obtained from the forward-view camera of the second vehicle if the first vehicle is directly ahead of the second vehicle, it may be ensured that the wireless data connection is established only if the first and second vehicles move in immediate succession. In other words and generally, the determining whether the first vehicle and the second vehicle move in immediate succession may at least comprise optical verification of the movement in succession.

As can be seen from the above, various techniques are conceivable which may be employed as part of the determining whether the first and second vehicles move in immediate succession. The above examples are not to be construed as being limiting.

Various effects may be obtained by the techniques as described above. E.g., it may be possible to provide the driver assistance in a manner which makes use of the first vehicle being ahead of the second vehicle. In other words, the driver assistance may relate to an application which particularly relies on the scenario of the first and second vehicles moving in immediate succession. Moreover, it may be possible to reduce an amount of data traffic present on the wireless data connection. Namely, while in conventional scenarios the wireless data connection is typically established between all vehicles which are situated in the respective vicinity corresponding to, e.g., the transmission range, according to the presently discussed techniques the wireless data connection may be restricted to communication between the first and the second vehicles. Then a transmission power may be reduced, because typically the distance between the first and second vehicles may be comparably small; by this, frequency band resources which would be otherwise occupied may be released. Also resources in further vehicles which are not participating may be released.

For example, the operational parameter may correspond to image data of a forward-view camera of the first vehicle. The providing of the driver assistance may include displaying at least parts of the image data on a display.

By such means, it may be possible to provide the driver of the second vehicle with an expanded or enhanced viewing range. In particular, a driver of the second vehicle may see what is ahead of the first vehicle which, in turn, is driving ahead of the second vehicle. In such a manner, obstructions and/or dangerous situations on the road ahead of the first and second vehicles may be detected comparably early by the driver of the second vehicle. The safety in driving may increase. Obstacles on the road, which would be otherwise hidden, e.g., by curvature of the road and / or the first vehicle itself, may become visible to the driver of the second vehicle from the displaying of the at least parts of the image data on the display.

The display may be a Liquid Crystal Display (LCD) fixedly installed in the second vehicle, a head up display, and / or a display of a portable device which may be connected with a vehicle head unit of the second vehicle, etc.

For example, the image data of the forward-view camera of the first vehicle may be encoded as digital data. The image data may be compressed in order to reduce the amount of data to be transmitted via the wireless data connection. For example, the image data of the forward-view camera of the first vehicle received by the second vehicle may correspond to moving images, i.e., a movie. For example, a refresh rate of the image data which is received by the second vehicle may be less than a refresh rate of the image data being originally obtained by the forward-view camera of the first vehicle. By such means, an amount of data to be transmitted via the wireless data connection can be further reduced.

For example, a comparably short amount of time may elapse between obtaining of the image data by the forward-view camera of the first vehicle and the displaying of the at least parts of the image data on the display of the second vehicle. For example, the short amount of time may relate to a substantially real-time playback, i.e., less than 1 second, or less than 0.5 seconds, or even shorter times.

According to the invention, the method comprises establishing whether a passing of the first vehicle by the second vehicle is desired. The displaying and/or the selectively receiving further depends on the establishing whether the passing of the first vehicle by the second vehicle is desired.

For example, if it is established that a high likelihood exists that the driver of the second vehicle intends to pass the first vehicle, the driver assistance may be provided in the form of the displaying of the at least parts of the image data on the display of the second vehicle. Then it may be possible for the driver of the second vehicle to base the decision whether to pass the first vehicle on the extended viewing range achieved via the displayed image data. For example, if oncoming traffic is visible in the image data, a warning may be additionally issued and the driver of the second vehicle may postpone the passing the first vehicle. All this may increase traffic safety.

According to an example which is not part of the invention as claimed, the establishing whether the passing of the first vehicle by the second vehicle is desired can be based on user input, i.e., occur manually. However, it may also be possible that the establishing occurs automatically. According to the invention, the establishing whether the passing of the first vehicle by the second vehicle is desired is based on elements selected from the group comprising: a curviness of a road on which the second vehicle travels; a distance to an upcoming curve on the road on which the second vehicle travels; traffic signs detected based on the image data of a forward-view camera of the second vehicle; lane markings of the road detected based on the image data of the forward-view camera of the forward-view camera of the second vehicle. According to examples which are not part of the invention as claimed, the establishing whether the passing of the first vehicle by the second vehicle is desired may be based on elements selected from the group comprising: a current velocity of the second vehicle; a historic velocity of the second vehicle; a distance between the second vehicle and the first vehicle; traffic signs detected based on the image data of the forward-view camera of the first vehicle ; opposing traffic detected based on the image data of the forward-view camera of the first vehicle and / or based on the further image data of the forward-view camera of the second vehicle; lane markings of the road detected based on the image data of the forward-view camera of the first vehicle ; and user input.

Examples of decision criterions in view of the above-mentioned factors influencing the establishing are given below; however, these decision criterions are merely examples and are not to be construed as being limiting: E.g., if the curviness of the road on which the second vehicle travels is smaller (larger) than a threshold, it may be established that the passing of the first vehicle is (not) desired. E.g., if the current velocity of the second vehicle is equal or above (below) the historic velocity of the second vehicle, e.g., on the particular road type of the road on which the second vehicle travels, it may be established that the passing is (not) desired. A moving window may be employed for averaging when determining the historic velocity. E.g., if the distance between the second vehicle and the first vehicle is smaller (larger) than a threshold distance, it may be established that the passing of the first vehicle is (not) desired. E.g., if the traffic signs and/or the lane markings indicate a passing restriction, it may be established that the passing of the first vehicle is not desired. Likewise, if opposing traffic is detected, it may be established that the passing is not desired. For example, if various of the above-mentioned criteria are fulfilled, a human machine interface (HMI) may prompt the user whether he intends to pass the first vehicle which is driving ahead. Then, in response to the user input and/or various of the above-mentioned criteria being fulfilled, the driver assistance in form of the displaying of the image data may be provided.

The above-mentioned techniques may have the effect that the driver assistance is provided in a selective manner. E.g., only if the passing of the first vehicle becomes comparably likely, i.e., if a likelihood exceeds a predefined threshold, the driver assistance in the form of the displaying of the image data may be provided. All this may reduce a workload imposed on the driver of the second vehicle. Further, traffic safety may be increased by not unnecessarily disturbing the driver of the second vehicle.

The method may further comprise sending a message to the first vehicle which includes a warning indicating the passing of the first vehicle by the second vehicle. E.g., the message can be sent via the wireless data connection which is employed for the receiving of the at least one operational parameter. The message may also relate to the second vehicle operating front lights and / or a horn. By such means, if the passing of the first vehicle by the second vehicle is imminent, it becomes possible to warn the driver of the first vehicle in order to avoid dangerous situations.

Above, techniques have been discussed predominantly which relate to the operational parameter corresponding to the image data of the forward-view camera of the first vehicle. The driver assistance may be provided in order to assist the driver of the second vehicle in passing of the first vehicle. Below, techniques will be discussed predominantly where the at least one operational parameter corresponds to at least one movement value of the first vehicle.

E.g., the movement value of the first vehicle may correspond to a driver movement request and/or to a measured movement value. E.g., the driver movement request may relate to a braking pedal actuation and/or may relate to a throttle pedal actuation by the driver of the first vehicle. E.g., the measured movement value may be one of a current acceleration, a current velocity, and a current position of the first vehicle. Other movement values may be selected from the group comprising: revolution rate of a motor of the first vehicle, fuel level, cruise control engaged, headlights on/off, etc. In other words, the driver movement request may correspond to a user actuation which aims at setting of a certain movement value; likewise, the measured movement value may corresponds to the actual movement value as presently measured. For example, the movement value may include elements selected from the group comprising: a signal indicating an actuation of a brake pedal of the first vehicle; a signal indicating an actuation of a throttle pedal of the first vehicle; an indicator indicating a current velocity of the first vehicle; an indicator indicating a current change of velocity of the first vehicle; an indicator indicating a current position of the first vehicle.

By such techniques it may be possible to directly access the movement characteristics of the first vehicle. Dangerous situations may be detected quickly and directly. Also it may be possible to correlate the movement characteristics of the first and second vehicle, e.g., it may be possible to maintain a minimum distance between the first and second vehicle or align acceleration and velocity of the first and second vehicles. In other words, a convoy driving of the first and second vehicles may be achieved. This may release the driver of the second vehicle from certain driving tasks.

In particular, by the above-mentioned techniques it may be expendable to measure the movement value indirectly by sensor means of the second vehicle. For example, in various reference implementations it is known to provide the sensor means in the form of a radar, lidar, and / or an optical camera in the second vehicle. Here the movement values of the first vehicle may be measured by the sensors of the second vehicle. Such techniques typically show a significant inherent uncertainty due to limited measurement accuracy and may furthermore be subject to failure and errors. In contrast, by receiving the operational parameter in the form of the movement value of the first vehicle driving ahead of the second vehicle, a more direct and fail-safe way of obtaining information on the movement values of the first vehicle is achieved. E.g., the movement values may be received in digital format, e.g., including a checksum. By such means, errors of transmission may be reduced. Further, the measurement of the movement values of the first vehicle by sensors of the first vehicle may be more accurate and reliable due to a higher measurement accuracy than the measurement of the movement value of the first vehicle by sensors of the second vehicle.

A further effect which may be achieved by the above-techniques, where the driver movement request is received, is described in the following: in various reference implementations where the movement value of the first vehicle is measured by sensors of the second vehicle, a current state of the motion of the first vehicle may be determined. When receiving the movement value in the form of the driver movement request, to a certain degree the state of motion of the first vehicle may be anticipated, i.e., predicted. This is because typically the motion state of the first vehicle will follow the driver movement request with a certain delay. E.g., if the driver actuates the throttle pedal, the vehicle will begin to accelerate with a certain inertia given by limited power resources. Only after a while a faster velocity is reached, i.e., the movement request is realized. Of course, it is typically not possible to measure the driver movement request of the driver of the first vehicle by sensors of the second vehicle.

According to an example which is not part of the claimed invention, the providing of the driver assistance may comprise the second vehicle automatically following the first vehicle at a distance based on the received at least one movement value of the first vehicle. For example, if the first vehicle accelerates, i.e., shows a decrease or increase of its velocity, this acceleration may be adapted by the second vehicle. This may relate to the convoy driving. In such a manner, the driver of the second vehicle may be released of certain driving tasks, thereby reducing the workload imposed on the driver of the second vehicle and increasing safety.

In particular, in dangerous situations, e.g., where the first vehicle performs a strong braking, a reaction time of the driver of the second vehicle, which in conventional scenarios delays the onset of braking by the second vehicle, may be circumvented. The overall time needed to bring the second vehicle to a complete stop may be reduced.

The automatically following may comprise: based on the received at least one movement value of the first vehicle, controlling a brake system of the second vehicle to decelerate the second vehicle and / or controlling a throttle system of the second vehicle to accelerate the second vehicle, thereby maintaining the distance.

According to an example which is not part of the claimed invention, the providing of the driver assistance may further comprise setting the distance at least in dependence of a velocity of the second vehicle and / or of the first vehicle. E.g., for larger (smaller) velocities of the first vehicle and / or the second vehicle, a larger (smaller) distance may be set. This may ensure that breaking is possible in case of dangerous situations.

The at least one operational parameter may comprise a dynamic response function of the first vehicle which characterizes elements of movement capabilities of the first vehicle. The setting of the distance may further depend on the received dynamics response function. For example, the dynamics response function may specify a maximum positive and/or negative acceleration, sometimes referred to as deceleration, of the first vehicle. For example, a sports car may typically have a dynamics response function which indicates a larger maximum positive acceleration than a family van. The dynamics response function may specify a maximum velocity of the first vehicle. For example, if the dynamics response function indicates a large (small) maximum negative acceleration of the first vehicle, the distance may be set to larger (smaller) values. The dynamics response function may alternatively or additionally correlate the driver movement request with a temporal evolution of the measured movement value. For example, if a certain velocity and throttle pedal actuation is received together with a corresponding dynamics response function, the amount of acceleration over the next seconds may be determined. Of course, in general it may be possible to anticipate the movement values over time even without the knowledge of the dynamics response function. As can be seen from the above, the type and information content of the dynamics response function is not particularly limited.

It is also possible that the method further comprises determining the acceleration of the second vehicle in dependence of the dynamics response function of the first vehicle and in dependence of the movement value of the first vehicle. Optionally, the determining of the acceleration of the second vehicle may be in dependence of a dynamics response function of the second vehicle.

For example, if the negative acceleration of the second vehicle as indicated by the at least one operational parameter received by the second vehicle equals a maximum negative acceleration as indicated by the dynamics response function of the first vehicle, it may be possible to determine the acceleration of the second vehicle such that the second vehicle executes an emergency braking. Typically, in such a situation the acceleration of the second vehicle may be determined as a maximum negative value.

In general, it is possible to determine any movement value of the second vehicle in dependence of the dynamics response function of the first vehicle. Techniques as described above may be readily applied.

Likewise, according to an example which is not part of the claimed invention, the providing of the driver assistance may include the second vehicle executing an emergency braking when a current acceleration of the first vehicle exceeds a threshold.

According to a further aspect, a driver assistance entity of a second vehicle according to appended claims 7-8 is provided.

For example, the driver assistance entity according to the presently discussed aspect may be configured to execute the method of providing driver assistance according to a further aspect of the present application.

For such a driver assistance entity, effects may be obtained which are comparable to the effects which may be obtained with the method of providing driver assistance according to a further aspect of the present application.

Features mentioned above and features yet to be explained may not only be used in isolation or in combination as explicitly indicated, but also in other combinations. Features and embodiments of the present application may be combined unless explicitly mentioned otherwise.

### Brief Description of the Drawings

Various features of embodiments of the present application will become more apparent when read in conjunction with the accompanying drawings. In these drawings:
FIG. 1 is a schematic illustration of a driver assistance entity according to various embodiments.
FIG. 2 shows a first vehicle driving ahead of a second vehicle with a wireless data connection being established between the first and second vehicles.
FIG. 3 shows fields of views of the first vehicle and the second vehicle.
FIG. 4 illustrates the displaying of image data obtained with a forward-view camera of the first vehicle on a display of the second vehicle.
FIG. 5A shows movement values of the first vehicle.
Fig. 5B sows a dynamics response function of the first vehicle.
FIG. 6A illustrates a velocity of the first and second vehicles over time when the second vehicle follows the first vehicle.
FIG. 6B illustrates the velocity of the first and second vehicles when the second vehicle executes an emergency braking.
FIG. 7 is a flowchart of a method of providing driver assistance according to various embodiments.

### Detailed Description

In the following, embodiments of the invention will be described in detail with reference to the accompanying drawings. It is to be understood that the following description of the embodiments is not to be taken in a limiting sense. The scope of the invention is not intended to be limited by the embodiments described hereinafter or by the drawings, which are to be taken demonstrative only.

The drawings are to be regarded as being schematic representations and elements illustrated in the drawings are not necessarily shown to scale. Rather, the various elements are represented such that their function and general purpose become apparent for a person skilled in the art. Any connection or coupling between functional blocks, devices, components or other physical or functional units shown in the drawings or described herein may also be implemented by an indirect connection or coupling. A coupling between components may also be established over a wireless connection, unless noted otherwise. Functional blocks may be implemented in hardware, firmware, software, or a combination thereof.

Hereinafter, techniques are described which enable to provide driver assistance to a driver of a second vehicle if the second vehicle drives directly behind a first vehicle. In other words, if it is determined that the first vehicle and the second vehicle move in immediate succession, the driver assistance is provided. In particular, the driver assistance relies on at least one operational parameter of the first vehicle which is wirelessly received by the second vehicle. For example, the operational parameter may correspond to image data of a forward-view camera of the first vehicle and/or may correspond to a movement value of the first vehicle. Based on such operational parameters it is possible to provide the driver assistance such that it makes use of the first vehicle and the second vehicle moving in immediate succession.

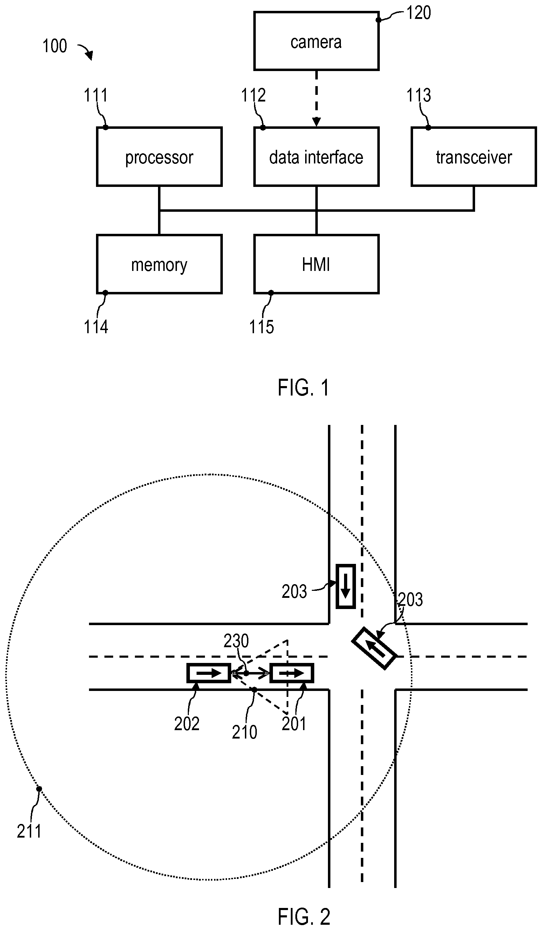

In FIG. 1, a driver assistance entity 100 which is configured to execute techniques as mentioned above is illustrated. A respective driver assistance entity 100 may be part of the first vehicle and / or of the first vehicle. The driver assistance entities 100 of the first and the second vehicles may be inter-related and provide corresponding functionality. The driver assistance entity 100 comprises a processor 111 which can access a memory 114. The processor 111 is configured to execute various tasks, which can be selected from the group comprising: image data analysis of image data received via a transceiver 113; providing the driver assistance; controlling vehicle components as part of the providing of the driver assistance; receiving input from a user of the driver assistance entity 100 via a human machine interface 115; outputting information to the user via the human machine interface 115; obtaining and analyzing image data which is acquired with a forward-view camera 120 and received via a data interface 112; etc. For example, the processor 111 can be a single core processor or a multi core processor. Various functionalities of the processor 111, e.g., as mentioned above, may be implemented as software which is executed by different physical entities. In other words, it is not necessary that the processor 111 is implemented as a single physical entity; rather, the various functions of the processor 111 may be realized by a plurality of various physical entities. Furthermore, functionality of the processor 111 will become apparent from the detailed description of the techniques hereinafter.

The HMI 115 can comprise a display. The transceiver 113 may operate according to the car2car communication standard and / or the WLAN standard. It can establish a wireless data connection between vehicles. The memory 114 can be a permanent memory. The camera 120 can be an optical camera and / or provide sensitivity in the infrared region of the spectrum. The driver assistance entity 100 can be further coupled with a navigation device which has access to a map database including a network of road segments. E.g., from such data a curviness of the road and / or a distance to an upcoming curve and / or speed limits and / or passing restrictions, etc. can be determined.

Turning to FIG. 2, a situation of a first vehicle 201 and a second vehicle 202 driving in immediate succession, wherein the first vehicle 201 moves ahead of the second vehicle 202, is illustrated. The wireless data connection 230 is established between the first and second vehicles 201, 202 such that data can be transmitted between the first and second vehicles 201, 202. A transmission range 211 of the wireless data connection 230 is illustrated. As can be seen, further vehicles 203 are situated within the transmission range 211. The further vehicles 203 do not participate in the wireless data connection 230.

Before establishing the wireless data connection 230 between the first and second vehicles 201, 202, it is determined whether the first and second vehicles 201, 202 indeed move in immediate succession. For example, this can include optically verifying that the first vehicle 201 is ahead of the second vehicle 202, e.g, by analyzing the image data acquired with the forward-view camera 120 of the driver assistance entity 100 of the second vehicle 202. In FIG. 2, the viewing range 210 of the forward-view camera 120 of the second vehicle 202 is indicated. As can be seen, the viewing range 210 covers a rear portion of the first vehicle 201. E.g., due to this it can be established that the first vehicle 201 drives immediately ahead. This may further include verifying that a license plate number of a license plate mounted on the rearward portion of the first vehicle 201 matches the identification number of the first vehicle 201 transmitted via the wireless data connection 230. Various alternative techniques are possible in order to establish that the first and the second vehicles 201, 202 move in immediate succession.

Once it is determined that the first and second vehicles 201, 202 move in immediate succession, the second vehicle 202 selectively receives at least one operational parameter from the first vehicle 201 via the wireless data connection 230. Based on this received at least one operational parameter, driver assistance is provided to the driver of the second vehicle 202.

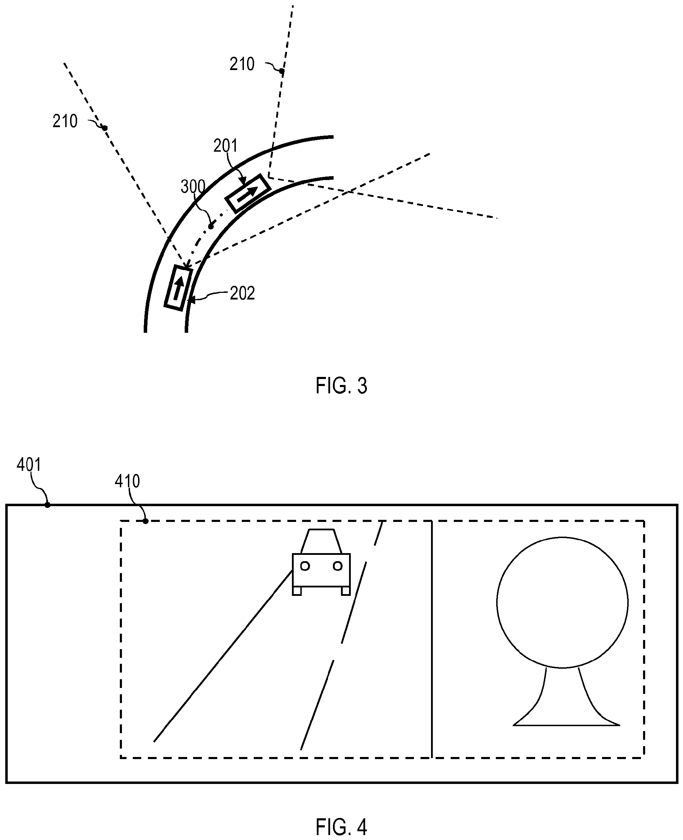

E.g., the at least one operational parameter can correspond to image data of a forward-view camera of the first vehicle 201. In FIG. 3, the fields of view 210 of forward-view cameras (not shown in FIG. 3) of the first and the second vehicles 201, 202 are illustrated. In particular, the first and second vehicles 201, 202 move on a curved road. As can be seen from FIG. 3, the field of view 210 of the first vehicle 201 covers a part of the road ahead of the second vehicle 202 which is not covered by the field of view 210 of the forward-view camera of the second vehicle 202. Further, areas ahead of the first vehicle 201 are obstructed in the direct line of sight of the driver of the second vehicle 202, but are visible in the image data. Thereby, by displaying image data of the forward-view camera of the first vehicle 201 on the display of the second vehicle 202, it may be possible that the driver of the second vehicle 202 obtains a better overview of the situation on the road ahead. For example, the display on which the image data of the forward-view camera of the first vehicle 201 is displayed may be part of the HMI 115 of the driver assistance entity 100 of the second vehicle 202 (cf. FIG. 1). For example, the display of the HMI 115 may be fixedly installed in the second vehicle 202 and/or may be a display of a portable user equipment.

In FIG. 4, the display 401 of the driver assistance entity 100 of the second vehicle 202 is schematically illustrated. As can be seen from FIG. 4, parts of the image data 410 of the forward-view camera of the first vehicle 201 are displayed on the display 401. Opposing traffic can be seen on the road. In such a situation, it may be established that a passing of the first vehicle 201 by the second vehicle 202 is undesirable due to the opposing traffic. Further criteria may be used in order to establish whether the passing of the first vehicle 201 by the second vehicle 202 is desired. For example, a curviness of the road on which the second vehicle 202 travels may be determined, and based on the curviness it may be established whether the passing is desired. The curviness may be determined from the map data of the navigation system of the second vehicle 202. For example, in the scenario of FIG. 3, a large curviness of the road on which the second vehicle 202 travels is present. In such a scenario, it may be undesirable to pass the first vehicle 201. Further criteria based on which it can be established whether the passing of the first vehicle 201 is desired can be selected from the group comprising: a current velocity of the second vehicle 202; a historic velocity of the second vehicle 202; a distance between the second vehicle 202 and the first vehicle 201; a distance to an upcoming curve on a road on which the second vehicle 202 travels; traffic signs detected based on the image data 410 of the forward-view camera of the first vehicle 201 and/or further image data of the forward-view camera 120 of the second vehicle 202; passing restrictions; lane markings of the road on which the second vehicle 202 travels, the lane markings being detected based on the image data 410 and/or on further image data of the forward-view camera 120 of the second vehicle 202. Alternatively or additionally, a user input obtained via the HMI 115 may be used in order to determine whether it is desired to pass the first vehicle 201. E.g., the user input may correspond to an actuation of a throttle pedal or may correspond to the operation of a left blinker. The user input may also relate to a voice command, a gesture, pushing of a button, etc.

E.g., once it is determined that the passing of the first vehicle 201 is desired, it is possible to send a message to the first vehicle 201 via the wireless data connection 230 which includes a warning. For example, by means of this message the driver of the first vehicle 201 can be made aware of the upcoming passing of the second vehicle 202. The warning may be issued to the driver of the first vehicle 201, e.g., by displaying of a corresponding message, or by issuing a voice instruction.

Above, scenarios have been predominantly discussed which relate to the driver assistance assisting the driver of the second vehicle 202 in the passing of the first vehicle 201 driving ahead of the second vehicle 202. As will be appreciated, such a driver assistance application makes inherent use of the first and second vehicles 201, 202 driving in immediate succession. A further driver assistance application making inherent use of the first and second vehicle 201, 202 driving in immediate succession is explained below.

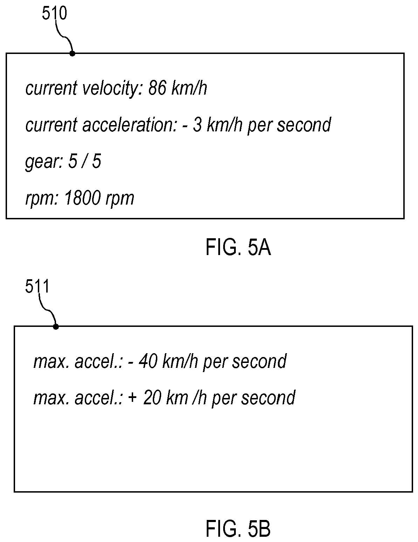

Shown in FIG. 5A is a scenario where the at least one operational parameter wirelessly received from the first vehicle 201 corresponds to movement values 510 of the first vehicle 201. The movement values 510 of the first vehicle 201 include a current velocity of the first vehicle 201, a current acceleration, a current gear, and a current revolution rate of the gear. Of course, it is possible to include other movement values or only parts of the movement values as indicated in FIG. 5A. E.g., the movement values as mentioned above can be directly measured by appropriate sensors in the first vehicle 201.

Alternatively or additionally it is also possible that the movement values 510 include a driver movement request (not shown in Fig. 5A), e.g., a braking pedal actuation and/or a throttle pedal actuation which are specified qualitatively and / or quantitatively. Typically, the measured movement values will - with a certain delay - conform to this driver movement request. Therefore, by considering the driver movement request it is possible to anticipate the future development of the measured movement values to a certain degree, e.g., for a couple of seconds or even longer periods of time.

In FIG. 5B, the movement value in the form of the dynamics response function 511 of the first vehicle 201 is illustrated. The dynamics response function 511 characterizes capabilities and general parameters of the movement of the first vehicle 201. In the scenario of FIG. 5B, these parameters are maximum negative acceleration and maximum positive acceleration. For example, the dynamics response function 511 could further comprise a breaking distance, a remaining amount of fuel, a maximum velocity of the first vehicle 201, etc. The dynamics response function of the first vehicle 201 may be additionally or alternatively employed by the second vehicle 202 to translate a driver movement request into an estimated future movement value of the first vehicle 201, e.g., correlate a certain degree of throttle pedal actuation with a certain value of positive acceleration, etc..

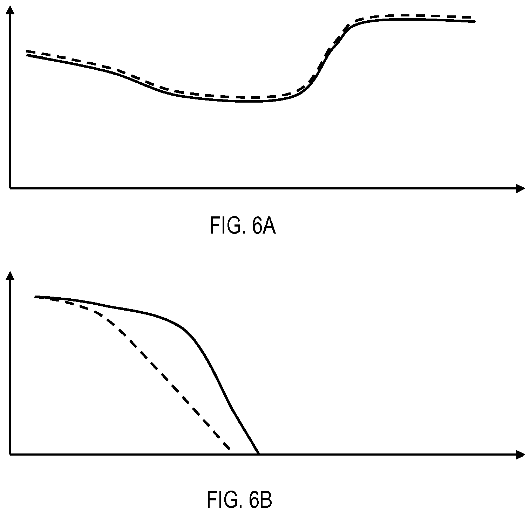

In general, it is possible that at least some movement values of the second vehicle 202 are determined based on the received movement value 510, 511 of the first vehicle 201. Such a situation is illustrated in FIG. 6A. In FIG. 6A, the velocity 601 of the first and second vehicles 201, 202 is plotted over time 602. In FIG. 6A, the full line denotes the velocity of the second vehicle 202 and the dashed line denotes the velocity 601 of the first vehicle 201. As can be seen, the velocity 601 of the second vehicle 202 approximately equals the velocity of the first vehicle 201. Namely, by controlling a breaking system and/or a throttle system of the second vehicle 202 in dependence of the received movement values 510, 511 of the first vehicle 201, it becomes possible that the second vehicle 202 automatically follows the first vehicle 201 at a certain distance 300 (cf. FIG. 3). For example, it is possible that the distance 300 is set in dependence of a velocity of the second vehicle 202 and/or of a velocity of the first vehicle 201. In a simple scenario, the larger (smaller) velocity 600, the larger (smaller) the distance 300. For example, the distance 300 can further depend on the dynamic response function 511. For example, if the dynamic response function 511 of the first vehicle 201 indicates a comparably large maximum negative acceleration of the first vehicle 201, the distance 300 can be set to larger values. This allows to maintain a sufficient security distance when the second vehicle 202 follows the first vehicle 201.

Moreover, the dynamics response function 511 may be particularly relevant if the movement values solely include the driver movement request; in particular in such a case, the acceleration of the second vehicle 202 may be determined in dependence of the dynamics response function of the first vehicle 201. In general, the dynamics response function may correlate a particular driver movement request with a future evolution of the movement values. In other words, based on the dynamics response function it may be possible to predict how the vehicle will react on a certain driver movement request. By such means it becomes possible to reliably follow the first vehicle 201. In general, the acceleration of the second vehicle 202 can also be determined in dependence of the movement value 510 of the first vehicle 201.

If compared to conventional scenarios where respective sensors of the second vehicle 202 measure one or more movement values 510 of the first vehicle 201, a more direct access to the movement values of the first vehicle 201 becomes possible. In particular, measurement errors or uncertainties in the measurement can be avoided; rather, a direct access to the movement values of the first vehicle 201 becomes possible. Also, a change in the movement values of the first vehicle 201 may be anticipated based on the driver movement request and / or the dynamics response function.

Besides an increased comfort in driving due to the automatically following of the first vehicle 201, this may also increase the safety in driving. For example, as illustrated in FIG. 6B, when an acceleration of the first vehicle falls below a threshold, the second vehicle 202 can execute an emergency breaking. As can be seen from FIG. 6B, the negative acceleration of the first vehicle 201 (illustrated by the dashed line in FIG. 6B) amounts to a comparably large value. Consequently, the deceleration of the second vehicle 202 is increased to a maximum level corresponding to the emergency breaking.

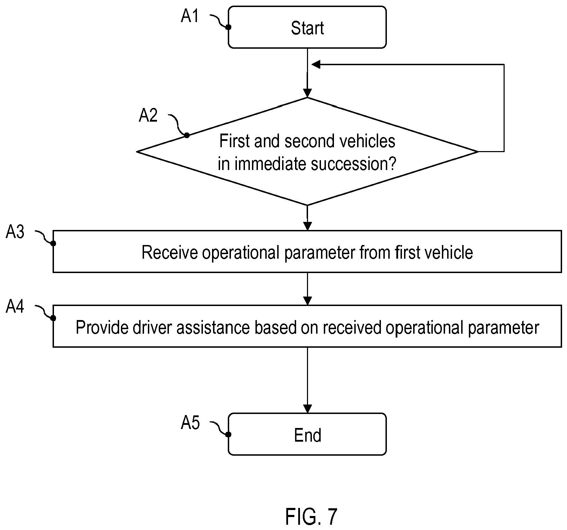

In FIG. 7, a flowchart of a method of providing driver assistance is illustrated. The method starts in step A1. In step A2 it is determined whether the first and second vehicles 201, 202 are in immediate succession. Only if the first and second vehicles 201, 202 are in immediate succession, the method commences with step A3. In step A3, the operational parameters 410, 510, 511 are wirelessly received from the first vehicle 201. For example, the operational parameters can correspond to the image data 410 of the forward-view camera of the first vehicle 201 and/or to the movement values 510, 511 of the first vehicle.

In step A4, the driver assistance is provided based on the received operational parameters of step A3. The method ends in step A5.

Although the invention has been described with respect to certain preferred embodiments, various modifications will occur to the person skilled in the art. The invention is only limited by the scope of the appended claims.

## Claims

1. A method of providing driver assistance for a driver of a second vehicle (202) by wirelessly receiving at least one operational parameter (410, 510, 511) of a first vehicle (201), the first vehicle (201) being ahead of the second vehicle (202), the method comprising:
- *determining* whether the first vehicle (201) and the second vehicle (202) move in succession, without further vehicles in-between the first vehicle and the second vehicle,
- the second vehicle (202) establishing whether the passing of the first vehicle (201) by the second vehicle (202) is desired,
- in dependence of said determining and said establishing, the second vehicle (202) broadcasting a wireless data connection request with the first vehicle (201),
- the second vehicle (202) selectively *receiving* the at least one operational parameter (410, 510, 511) from the first vehicle (201) via the wireless data connection, established between the first vehicle and the second vehicle further to said request,
- based on the at least one operational parameter (410, 510, 511), *providing* the driver assistance,
wherein said establishing whether the passing of the first vehicle (201) by the second vehicle (202) is desired is based on elements selected from the group comprising:
- a curviness of a road on which the second vehicle (202) travels based on data from a navigation device of the second vehicle coupled to a map database;
- a distance to an upcoming curve on the road on which the second vehicle (202) travels based on data from the navigation device of the second vehicle
- traffic signs detected based on image data (410) of a forward-view camera of the second vehicle (202); and
- lane markings of the road detected based on the image data of the forward-view camera of the second vehicle (202).

2. The method of claim 1,
wherein the at least one operational parameter (410, 510, 511) corresponds to image data (410) of a forward-view camera of the first vehicle (201),
wherein the providing of the driver assistance includes displaying at least parts of the image data (410) on a display (401).

3. The method of claim 1, further comprising:
- *sending* a message to the first vehicle (201), the message including a warning indicating the passing of the first vehicle (201) by the second vehicle (202).

4. The method of claim 1,
wherein the at least one operational parameter (410, 510, 511) corresponds to at least one movement value (510, 511) of the first vehicle (201).

5. The method of claim4,
wherein the movement value (510, 511) of the first vehicle (201) corresponds to a driver movement request and / or to a measured movement value.

6. The method of any one of the preceding claims,
wherein the determining whether the first vehicle (201) and the second vehicle (202) move in immediate succession at least comprises optical verification of the movement in succession.

7. A driver assistance entity (100) of a second vehicle (202) and which is configured for providing driver assistance for a driver of the second vehicle (202) by wirelessly receiving at least one operational parameter (410, 510, 511) of a first vehicle (201), the first vehicle (201) being ahead of the second vehicle (202), the driver assistance entity comprising:
- a processor (111) configured to determine whether the first vehicle (201) and the second vehicle (202) move in succession, without further vehicles in-between the first vehicle and the second vehicle,
wherein the processor (111) is further configured to establish whether the passing of the first vehicle (201) by the second vehicle (202) is desired,
- a transceiver (113) configured to broadcast a wireless data connection request with the first vehicle in dependence with said determining and said establishing and to selectively receive the at least one operational parameter (410, 510, 511) from the first vehicle (201) via the wireless data connection, established between the first vehicle and the second vehicle further to said request,
the driver assistance entity (100) being configured to provide the driver assistance based on the at least one operational parameter (410, 510, 511),
wherein said establishing whether the passing of the first vehicle (201) by the second vehicle (202) is desired is based on elements selected from the group comprising:
- a curviness of a road on which the second vehicle (202) travels based on data from a navigation device of the second vehicle coupled to a map database;
- a distance to an upcoming curve on the road on which the second vehicle (202) travels based on data from the navigation device of the second vehicle coupled to a map database;
- traffic signs detected based on image data (410) of a forward-view camera of the second vehicle (202); and
- lane markings of the road detected based on the image data of the forward-view camera of the second vehicle (202).

8. The driver assistance entity (100) of claim 7,
wherein the driver assistance entity (100) is further configured to execute a method according to any one of the claims 1-6.

## Patentansprüche

1. Verfahren zum Bereitstellen einer Fahrhilfe für einen Fahrer eines zweiten Fahrzeugs (202) durch drahtloses Empfangen mindestens eines Betriebsparameters (410, 510, 511) eines ersten Fahrzeugs (201), wobei das erste Fahrzeug (201) sich vor dem zweiten Fahrzeug (202) befindet, wobei das Verfahren Folgendes umfasst:
- Bestimmen, ob sich das erste Fahrzeug (201) und das zweite Fahrzeug (202) hintereinander bewegen, ohne weitere Fahrzeuge zwischen dem ersten Fahrzeug und dem zweiten Fahrzeug,
- Feststellen durch das zweite Fahrzeug (202), ob gewünscht ist, dass das zweite Fahrzeug (202) das erste Fahrzeug (201) passiert,
- in Abhängigkeit von dem Bestimmen und dem Feststellen Senden einer Anforderung durch das zweite Fahrzeug (202) nach einer drahtlosen Datenverbindung mit dem ersten Fahrzeug (201),
- selektives Empfangen des mindestens einen Betriebsparameters (410, 510, 511) durch das zweite Fahrzeug (202) von dem ersten Fahrzeug (201) über die drahtlose Datenverbindung, die bezugnehmend auf die Anforderung zwischen dem ersten Fahrzeug und dem zweiten Fahrzeug hergestellt wurde,
- Bereitstellen der Fahrhilfe basierend auf dem mindestens einen Betriebsparameter (410, 510, 511),
wobei das Feststellen, ob gewünscht ist, dass das zweite Fahrzeug (202) das erste Fahrzeug (201) passiert, auf Elementen basiert, die aus der Gruppe ausgewählt sind, die Folgendes umfasst:
- eine Kurvigkeit einer Straße, auf der das zweite Fahrzeug (202) fährt, basierend auf Daten von einer Navigationsvorrichtung des zweiten Fahrzeugs, die mit einer Kartendatenbank gekoppelt ist;
- eine Entfernung zu einer bevorstehenden Kurve auf der Straße, auf der das zweite Fahrzeug (202) fährt, basierend auf Daten von der Navigationsvorrichtung des zweiten Fahrzeugs,
- Verkehrszeichen, die basierend auf Bilddaten (410) einer Frontsichtkamera des zweiten Fahrzeugs (202) erfasst werden; und
- Fahrspurmarkierungen der Straße, die basierend auf den Bilddaten der Frontsichtkamera des zweiten Fahrzeugs (202) erfasst werden.

2. Verfahren nach Anspruch 1,
wobei der mindestens eine Betriebsparameter (410, 510, 511) Bilddaten (410) einer Frontsichtkamera des ersten Fahrzeugs (201) entspricht,
wobei das Bereitstellen der Fahrhilfe das Anzeigen von mindestens Teilen der Bilddaten (410) auf einer Anzeigevorrichtung (401) beinhaltet.

3. Verfahren nach Anspruch 1, ferner Folgendes umfassend:
- Senden einer Nachricht an das erste Fahrzeug (201), wobei die Nachricht eine Warnung beinhaltet, die das Passieren des ersten Fahrzeugs (201) durch das zweite Fahrzeug (202) anzeigt.

4. Verfahren nach Anspruch 1,
wobei der mindestens eine Betriebsparameter (410, 510, 511) mindestens einem Bewegungswert (510, 511) des ersten Fahrzeugs (201) entspricht.

5. Verfahren nach Anspruch 4,
wobei der Bewegungswert (510, 511) des ersten Fahrzeugs (201) einer Fahrerbewegungsanforderung und/oder einem gemessenen Bewegungswert entspricht.

6. Verfahren einem der vorhergehenden Ansprüche,
wobei das Bestimmen, ob sich das erste Fahrzeug (201) und das zweite Fahrzeug (202) unmittelbar hintereinander bewegen, mindestens eine optische Überprüfung der aufeinanderfolgenden Bewegung umfasst.

7. Fahrhilfeeinheit (100) eines zweiten Fahrzeugs (202), die konfiguriert ist, um einem Fahrer des zweiten Fahrzeugs (202) eine Fahrhilfe bereitzustellen, indem sie drahtlos mindestens einen Betriebsparameter (410, 510, 511) eines ersten Fahrzeugs (201) empfängt, wobei das erste Fahrzeug (201) sich vor dem zweiten Fahrzeug (202) befindet, wobei die Fahrhilfeeinheit Folgendes umfasst:
- einen Prozessor (111), der konfiguriert ist, um zu bestimmen, ob sich das erste Fahrzeug (201) und das zweite Fahrzeug (202) hintereinander bewegen, ohne dass sich weitere Fahrzeuge zwischen dem ersten Fahrzeug und dem zweiten Fahrzeug befinden,
wobei der Prozessor (111) ferner konfiguriert ist, um festzustellen, ob gewünscht ist, dass das zweite Fahrzeug (202) das erste Fahrzeug (201) passiert,
- einen Transceiver (113), der konfiguriert ist, um eine Anforderung nach einer drahtlosen Datenverbindung mit dem ersten Fahrzeug in Abhängigkeit von dem Bestimmen und dem Feststellen zu senden und den mindestens einen Betriebsparameter (410, 510, 511) von dem ersten Fahrzeug (201) über die drahtlose Datenverbindung, die bezugnehmend auf die Anforderung zwischen dem ersten Fahrzeug und dem zweiten Fahrzeug hergestellt wurde, selektiv zu empfangen, wobei die Fahrhilfeeinheit (100) konfiguriert ist, um die Fahrhilfe basierend auf dem mindestens einen Betriebsparameter (410, 510, 511) bereitzustellen,
wobei das Feststellen, ob gewünscht ist, dass das zweite Fahrzeug (202) das erste Fahrzeug (201) passiert, auf Elementen basiert, die aus der Gruppe ausgewählt sind, die Folgendes umfasst:
- eine Kurvigkeit einer Straße, auf der das zweite Fahrzeug (202) fährt, basierend auf Daten von einer Navigationsvorrichtung des zweiten Fahrzeugs, die mit einer Kartendatenbank gekoppelt ist;
- eine Entfernung zu einer bevorstehenden Kurve auf der Straße, auf der das zweite Fahrzeug (202) fährt, basierend auf Daten von der Navigationsvorrichtung des zweiten Fahrzeugs, die mit einer Kartendatenbank gekoppelt ist;
- Verkehrszeichen, die basierend auf Bilddaten (410) einer Frontsichtkamera des zweiten Fahrzeugs (202) erfasst werden; und
- Fahrspurmarkierungen der Straße, die basierend auf den Bilddaten der Frontsichtkamera des zweiten Fahrzeugs (202) erfasst werden.

8. Fahrhilfeeinheit (100) nach Anspruch 7,
wobei die Fahrhilfeeinheit (100) ferner konfiguriert ist, um ein Verfahren nach einem der Ansprüche 1-6 auszuführen.

## Revendications

1. Procédé de fourniture d'aide à la conduite à un conducteur d'un second véhicule (202) par la réception sans fil d'au moins un paramètre opérationnel (410, 510, 511) d'un premier véhicule (201), le premier véhicule (201) étant devant le second véhicule (202), le procédé comprenant :
- la détermination du fait que le premier véhicule (201) et le second véhicule (202) se déplacent ou non à la suite l'un de l'autre, sans autre véhicule entre le premier véhicule et le second véhicule,
- l'établissement par le second véhicule (202) du fait que le dépassement du premier véhicule (201) par le second véhicule (202) est souhaité ou non,
- en fonction de ladite détermination et dudit établissement, la radiodiffusion par le second véhicule (202) d'une demande de connexion de données sans fil avec le premier véhicule (201),
- la réception sélective par le second véhicule (202) de l'au moins un paramètre opérationnel (410, 510, 511) en provenance du premier véhicule (201) via la connexion de données sans fil, établie entre le premier véhicule et le second véhicule suite à ladite demande,
- d'après l'au moins un paramètre opérationnel (410, 510, 511), la fourniture de l'aide à la conduite,
dans lequel ledit établissement du fait que le dépassement du premier véhicule (201) par le second véhicule (202) est souhaité ou non est basé sur des éléments sélectionnés dans le groupe comprenant :
- une sinuosité d'une route sur laquelle le second véhicule (202) circule d'après des données provenant d'un dispositif de navigation du second véhicule couplé à une base de données cartographique ;
- une distance jusqu'à une courbe imminente sur la route sur laquelle le second véhicule (202) circule d'après des données provenant du dispositif de navigation du second véhicule
- des panneaux de signalisation détectés d'après des données d'image (410) d'une caméra de vision avant du second véhicule (202) ; et
- des marquages au sol de la route détectés d'après les données d'image de la caméra de vision avant du second véhicule (202).

2. Procédé selon la revendication 1,
dans lequel l'au moins un paramètre opérationnel (410, 510, 511) correspond à des données d'image (410) d'une caméra de vision avant du premier véhicule (201),
dans lequel la fourniture de l'aide à la conduite comporte l'affichage au moins de parties des données d'image (410) sur un afficheur (401).

3. Procédé selon la revendication 1, comprenant en outre :
- l'envoi d'un message au premier véhicule (201), le message comportant un avertissement indiquant le dépassement du premier véhicule (201) par le second véhicule (202).

4. Procédé selon la revendication 1,
dans lequel l'au moins un paramètre opérationnel (410, 510, 511) correspond à au moins une valeur de déplacement (510, 511) du premier véhicule (201).

5. Procédé selon la revendication 4,
dans lequel la valeur de déplacement (510, 511) du premier véhicule (201) correspond à une demande de déplacement de conducteur et/ou à une valeur de déplacement mesurée.

6. Procédé selon l'une quelconque des revendications précédentes,
dans lequel la détermination du fait que le premier véhicule (201) et le second véhicule (202) se déplacent ou non immédiatement à la suite l'un de l'autre comprend au moins la vérification optique du déplacement à la suite l'un de l'autre.

7. Entité d'aide à la conduite (100) d'un second véhicule (202) et qui est configurée pour fournir une aide à la conduite à un conducteur du second véhicule (202) par la réception sans fil d'au moins un paramètre opérationnel (410, 510, 511) d'un premier véhicule (201), le premier véhicule (201) étant devant le second véhicule (202), l'entité d'aide à la conduite comprenant :
- un processeur (111) configuré pour déterminer si le premier véhicule (201) et le second véhicule (202) se déplacent à la suite l'un de l'autre, sans autre véhicule entre le premier véhicule et le second véhicule,
dans laquelle le processeur (111) est en outre configuré pour établir si le dépassement du premier véhicule (201) par le second véhicule (202) est souhaité,
- un émetteur-récepteur (113) configuré pour radiodiffuser une demande de connexion de données sans fil avec le premier véhicule en fonction de ladite détermination et dudit établissement et pour recevoir sélectivement l'au moins un paramètre opérationnel (410, 510, 511) en provenance du premier véhicule (201) via la connexion de données sans fil, établie entre le premier véhicule et le second véhicule suite à ladite demande,
l'entité d'aide à la conduite (100) étant configurée pour fournir l'aide à la conduite d'après l'au moins un paramètre opérationnel (410, 510, 511),
dans laquelle ledit établissement du fait que le dépassement du premier véhicule (201) par le second véhicule (202) est souhaité ou non est basé sur des éléments sélectionnés dans le groupe comprenant :
- une sinuosité d'une route sur laquelle le second véhicule (202) circule d'après des données provenant d'un dispositif de navigation du second véhicule couplé à une base de données cartographique ;
- une distance jusqu'à une courbe imminente sur la route sur laquelle le second véhicule (202) circule d'après des données provenant du dispositif de navigation du second véhicule couplé à une base de données cartographique ;
- des panneaux de signalisation détectés d'après des données d'image (410) d'une caméra de vision avant du second véhicule (202) ; et
- des marquages au sol de la route détectés d'après les données d'image de la caméra de vision avant du second véhicule (202).

8. Entité d'aide à la conduite (100) selon la revendication 7, dans laquelle l'entité d'aide à la conduite (100) est en outre configurée pour exécuter un procédé selon l'une quelconque des revendications 1 à 6.
